# EUROPÄISCHE PATENTSCHRIFT

(11) **EP 0 433 965 B1**
(45) Veröffentlichungstag und Bekanntmachung des Hinweises auf die Patenterteilung: **19.06.1996**
(21) Anmeldenummer: 90124560.5
(22) Anmeldetag: 18.12.1990
(51) Int. Cl.: G05B 19/042

(54) **Elektrisches Haushaltgerät oder dergleichen**
Household appliance or the like
Appareil électro-ménager ou pareil

(30) Priorität: 21.12.1989 DE 3942430
(43) Veröffentlichungstag der Anmeldung: 26.06.1991
(73) Patentinhaber: Bosch-Siemens Hausgeräte GmbH, D-81669 München (DE); THE COCA-COLA COMPANY, Atlanta, Georgia 30301 (US)
(72) Erfinder: Striek, Ralf-Jürgen, Dipl.-Ing., W-1000 Berlin 13 (DE); Müller, Peter, Dipl.-Ing., W-1000 Berlin 31 (DE)
(74) Vertreter: Rode, Franz

(56) Entgegenhaltungen:
- EP-A- 0 101 853
- DE-A- 3 324 482
- FR-A- 2 607 274
- GB-A- 2 135 799
- US-A- 4 381 459
- US-E- 31 864
- PATENT ABSTRACTS OF JAPAN vol. 12, no. 324 (E-653) 02 September 1988 & JP-A-63 088 931

## Beschreibung

Die Erfindung bezieht sich auf ein Elektrisches Haushaltgerät oder Gerät für Gaststätten und Beherbergungsbetriebe mit einer Steuerschaltung zum Ansteuern von Leistungselementen, wobei dieses Gerät Stromkreise unterschiedlicher Spannung besitzt, jedoch eine gemeinsame Stromversorgung aufweist und die Arbeitsabläufe im Gerät durch den Zustand seiner Geräteteile oder Gruppen bzw. auch von dem in ihm enthaltenen Arbeitsgutes messenden Sensoren beeinflußt werden und die Arbeitsabläufe über eine Tastatur vorwählbar sind.

DE-A-3 324 482 offenbart ein derartiges Gerät.

Insbesondere ist die Erfindung anwendbar für Wasch- und Geschirrspülmaschinen, Wäschetrockner und Geräte für die Zubereitung von Getränken, d.h. für Geräte, die Wasser führen.

Bei derartigen Geräten werden hohe Anforderungen an die Betriebs-Sicherheit gestellt, es müssen z.B. zwischen den berührbaren Teilen von Haushaltsgeräten, welche die Netzspannung führen, Luft- und Kriechstrecken von 8 mm, Isolationsstrecken von mindestens 2 mm liegen. Insbesondere müssen die Sensoren und die Bedienungs-Elemente sowie die Anzeigeelemente diese Forderung erfüllen. Gleiches gilt aber auch für die Leistungs-Schaltelemente; hier besteht die Gefahr, daß bei Handhabungen von Teilen des Gerätes eine Berührungsmöglichkeit erleichtert wird.

Es ist bekannt, die Eingangsschaltung mit Niederspannung zu betreiben, wie auch die Sensoren, denn diese sind meist leicht "berührbar". Möchte man das Gerät mit einer gemeinsamen Stromversorgung versehen, so muß der Niederspannungskreis gemäß den vorgenannten Bedingungen vom Arbeitsstromkreis getrennt werden (FR-A-2 607 274).

Es ist auch bekannt, Steuerungen für Haushaltsgeräte zum über eine serielle Datenleitung miteinander verbundene Mikorprozessoren zu reaalisieren, von denen einer der Mikroprozessoren den Eingabeelementen mit der andere der Mikroprozessoren den anzusteuernden Verbrauchern, wie Motoren, Heizung, Magnetventile usw. zugeordnet ist (DE-A-3 324 482).

Es ist eine Einrichtung zur potentialgetrennten Signalausgabe mit Hilfe von aus Ein- und Ausgangselementen bestehenden Optokopplern in einem durch eine Stromversorgungseinrichtung gespeisten Steuerwerk, das nur bei ordnungsgerechtem Betrieb ein diesen anzeigendes Kennsignal liefert, bekanntgeworden, bei der zur Stromversorgung der Ausgangselemente aller Optokoppler ein galvanisch trennender, vom Kennsignal des Steuerwerkes speisbarer Umsetzer vorgesehen ist (EP-A-0 101 853).

Die galvanische Trennung für den bei dieser Einrichtung für die Datensignale, ausgehend vom zentralen Steuerwert, zu jeweils den peripheren Ausgangselementen statt, d.h., daß je peripherer Leitung ein galvanisch trennendes Übertragungselement erforderlich ist.

Es ist daher eine Aufgabe der Erfindung, die vorgenannten Geräte so auszubilden, daß einerseits eine gemeinsame Stromversorgung des Gerätes möglich ist, andererseits aber ein Spannungsübergang z.B. an den Tastaturen Anzeigeelemente, Sensoren und dgl. vermieden wird.

Gemäß der Erfindung ist ein vorgenanntes Gerät dahingehend ausgestaltet, daß im Gerät die Steuerschaltung in mindestens eine Eingabe-Steuerschaltung und eine Leistungs-Steuerschaltung unterteilt ist, daß die Tastatur am Eingang der Eingabe-Steuerschaltung anliegt und die Leistungselemente am Ausgang der Leistungssteuerschaltung angeschlossen sind, daß in der Eingabe-Steuerschaltung ein Parallel-Serienwandler und in der Leistungs-Steuerschaltung ein Serien-Parallelwandler enthalten sind, daß diese über zumindest eine galvanisch trennende Signalverbindung gekoppelt sind, in der die Signale in Serie übertragen werden, und daß zumindest die Stromversorgung für die Eingabe-Steuerschaltung über einen Trenntransformator von der Geräte-Stromversorgung galvanisch getrennt ist.

Von der Leistungs-Steuerschaltung werden dann mittelbar die Leistungselemente, wie Motore, Ventile, Heizungen, Gebläse, Kühlungen und dgl. geschaltet. Die Signalverbindung zwischen der Eingabe-Steuerschaltung und der Leistungs-Steuerschaltung erfolgt vorteilhaft mittels fotooptischer oder fotoelektrischer Leiter, welche sich zur Signalübertragung gut eignen. Verwendet man fotoelektrische Leiter, so ist zwischen der Eingabe-Steuerschaltung und der Leistungs-Steuerschaltung ein fotooptischer oder fotoelektrischer Wandler gelegen. In einer bevorzugten Ausbildungsform ist zwischen der Eingabe-Steuerschaltung und der Leistungs-Steuerschaltung nur ein fotoelektrischer Wandler und nur eine Signalleitung gelegen, wobei die Signale hier in Serie übertragen werden. Eine derartige Ausbildungsform bedingt jedoch, daß in der Eingabe-Steuerschaltung ein Parallel-Serienwandler und in der Leistungs-Steuerschaltung ein Serien-Parallelwandler enthalten sind. Es besteht auch die Möglichkeit, wenn man auf eine derartige Übertragung zwischen der Eingabe- und der Leistungs-Steuerschaltung verzichten möchte, (wenn man z.B. die Steuerimpulse parallel übertragen möchte), mehrere Verbindungsleitungen der vorgenannten Art zwischen der Eingabe-Steuer- und der Leistungs-Steuerschaltung anzuordnen. Die von der Leistungs-Steuerschaltung angerufenen Betriebselemente sind einzelnen Leistungsverstärkern vorgeschaltet. An oder in der Eingabe-Steuerschaltung liegen ein Analog-Digitalwandler, die Signalleitungen der verschiedene Sensoren, ansonsten kann die Eingabe-Steuerschaltung mit einer Programmtastatur sowie mit Anzeigelemente versehen sein.

Statt der im ersten Ausführungsbeispiel genannten fotoelektrischen Wandler (Koppler) kann man auch Transformatoren verwenden, deren Wicklungen den vorgenannten Bedingungen entsprechen. Nachteilig ist indessen dabei, daß bei Verwendung von Transformatoren die Impulse von der Eingabe-Steuerschaltung zur Leistungs-Steuerschaltung abgerundet werden und nicht mehr der exakten ursprünglichen Impulsform entsprechen. Es ist daher im einzelnen Fall zu prüfen, ob als Übertragungselemente für den vorliegenden Fall Transformatoren geeignet sind.

Die Stromversorgung des Gerätes geschieht vom Netz. Vorteilhaft ist es, bei einer Ausführungsform mit Eingabe-Steuerschaltung und Leistungs-Steuerschaltung einen Sicherheitstransformator zu verwenden, z.B. gemäß VDE 0551, dem man einen Wechselstrom-Gleichrichter-Umwandler nachordnet, wobei man die Eingabe-Steuerschaltung z.B. mit 4 oder 6 V hingegen die Leistungs-Steuerschaltung mit 20 V oder 24 V betreibt. Mit einer entsprechend niedrigeren Gleichspannung - wie die Eingabe-Steuerschaltung - können dann die an ihr anliegenden Elemente, z.B. der Analog-Digitalwandler und die Sensoren betrieben werden.

In den Zeichnungen ist eine Schaltung hierfür, die die Zubereitung von limonadenartigen Getränken beispielsweise und schematisch dargestellt. Es zeigen:
Fig. 1 und 1a) eine Schaltung mit optischem Übertragungssystem,
Fig. 2 eine Teilansicht eines Gerätes mit optischem Übertragungssystem,

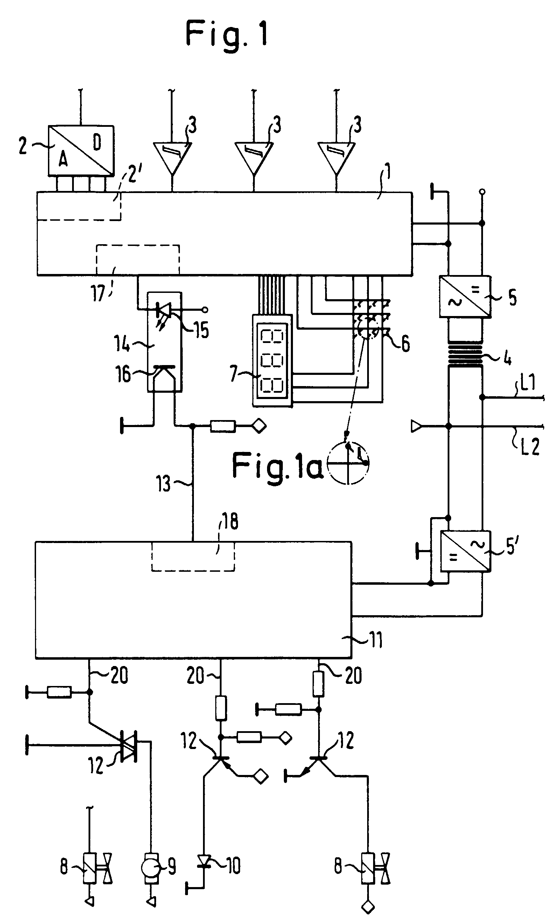

Die Schaltung gemäß Fig. 1 besitzt verschiedene Module bzw. Bauelementgruppen, welche an sich bekannt sind. In einer Eingabe-Steuerschaltung 1 ist ein Analog-Digitalwandler 2 integriert. Dieser Wandler kann auch außerhalb der Eingabe-Steuerschaltung angeordnet sein (wie dargestellt). Fernerhin liegen am Eingang der Eingabe-Steuerschaltung die Sensoren 3, welche z.B. den Stand der Flüssigkeiten, die Temperatur von Bauteilen oder von Flüssigkeiten oder eines anderen Zustandes des Gerätes oder der im Gerät enthalten Stoffe messen. An der Netzspannung L1 und L2 ist ein Sicherheitstransformator 4 gelegen, z.B. gemäß VDE 0551. Diesem Sicherheitstransformator ist - hier nicht gargestellt - ein Wechselstrom-Gleichstromwandler 5 nachgeordnet. Der Transformator und der Wechselstrom-Gleichtromwandler versorgen die Eingabe-Steuerschaltung 1 mit einem Gleichstrom von z.B. 4 bis 6 V. Fernerhin ist an der Eingabe-Steuerschaltung ein Tastenfeld 6 mit einem Anzeigefeld 7 zur Einstellung sind sichbare Kennzeichnungen verschiedener Betriebsabläufe angeschlossen Durch den Sicherheitstransformator 4 wird gewährleistet, daß keine Netzspannung auf die Steuerschaltung und auf deren Anzeige und den Sensoren sowie auf das Tastenfeld und dgl. übertragen wird. Damit wird auch sichergestellt, daß die hohen Anforderungen für netzspannungführende Teile für die Luft- und Kriechstrecken von 8 mm bzw. die Isolationsstrecken von mindestens 2 mm außer Betracht bleiben können Die Sensoren und Tasten sind berührbar. Zum Schalten der Ventile 8 des Motors 9 und der sonstigen Elementen benutzt man eine eigene Leistungs-Steuerschaltung 11, die hier ebenfalls mit einer Niederspannung betrieben wird; es besteht jedoch auch die Möglichkeit, sie mit der Netzspannung zu betreiben. Wird die Leistungs-Steuerschaltung 11 mit einer Niederspannung von beispielsweise 24 V betrieben, so ist Wechselstrom-Gleichstromwandler 5' ein Spannungsminderer, sei es ein Spannungsteiler oder ein Transformator. Im letzteren Falle können den Leistungselementen 8 bis 10 Verstärkungselemente bzw. Verstärker 12, wie Triacs, Transistoren und dgl. vorgeschaltet sein Im vorliegenden Falle empfiehlt es sich, die Leistungs-Steuerschaltung 11 mit 20 bis 24 V zu betreiben. Die Signalübertragung von der Eingabe-Steuerschaltung 1 zur Leistungs-Steuerschaltung 11 erfolgt hier über die Signalleitung 13, über welche z.B. die Schaltsignale seriell übertragen werden. Über einen fotoelektrischen Wandler 14 werden die ausgehenden Signale z.B. über einen Fototransistor 15 auf ein fotoelektrisches Element 16 übertragen, welches die Impulse oder Signale an die Leistungs-Steuerschaltung 11 weiterleitet. Entschließt man sich zum seriellen Übertragen der Signale von der Eingabe-Steuerschaltung 1 zur Leistungs-Steuerschaltung 11Steuerschalung 1 zur Leistungs-Steuerschaltung 11, so genügt nur eine Leitung 13; es ist auch möglich, Steuersignale von der Eingabe-Steuerschaltung zur Leistungs-Steuerschaltung 11 parallel zu übertragen; es sind so dann mehrere Signalleitungen 13 erforderlich. In der Eingabe-Steuerschaltung 1 ist im vorliegenden Falle bei nur einer Verbindungsleitung zur Leistungs-Steuerschaltung jeweils ein Parallel-Serienwandler 17 und ein Serien-Parallelwandler 18 erforderlich Auch ist es möglich, jedoch weniger empfehlenswert, anstelle der fotoelektrischen Wandler 14, Sicherheitstransformatoren zu verwenden, wobei jedoch zu beachten ist, daß die übertragenen Impulse durch die Transformatoren abgeschliffen werden. Durch die fotoelektrische Verbindung 13 wird gewährleistet, daß keine allzu hohen Spannungen von der Leistungs-Steuerschaltung auf die Eingabe-Schaltung übertragen werden. Durch die Verwendung eines Parallel-Serienwandlers auf die Eingabe-Steuerschaltung und eines Serien-Parallelwandlers in der Leistungs-Steuerschaltung wird nur ein Übertragungskanal für nahezu beliebig viele Daten benötigt. Diese Umsetzvorgänge können auch z.B. durch einen "Mikrocontroller" durchgeführt werden. Die "Intelligenz" der Steuerung kann sich entweder auf die Eingabe-Steuerschaltung 1 oder auf Leistungs-Steuerschaltung 11 oder auf beide Schaltungen verteilt beziehen. Der Mehraufwand gegenüber einer Lösung bei Parallelübertragung, nämliche die Verwendung eines Parallel-Serienwandlers und eines Serien-Parallelwandlers wird durch den möglichen Einsatz von einfachen Bedienungselementen und Leistungs-Schaltelementen, z.B. von Triacs mehr als ausgeglichen. Die gezeigte Schaltung bietet weitgehend Schutz gegen Berührung mit der Netzspannung.

Fig. 1a) zeigt lediglich ein Schaltsymbol einer Taste im Tastenfeld 6 der Steuerschaltung.

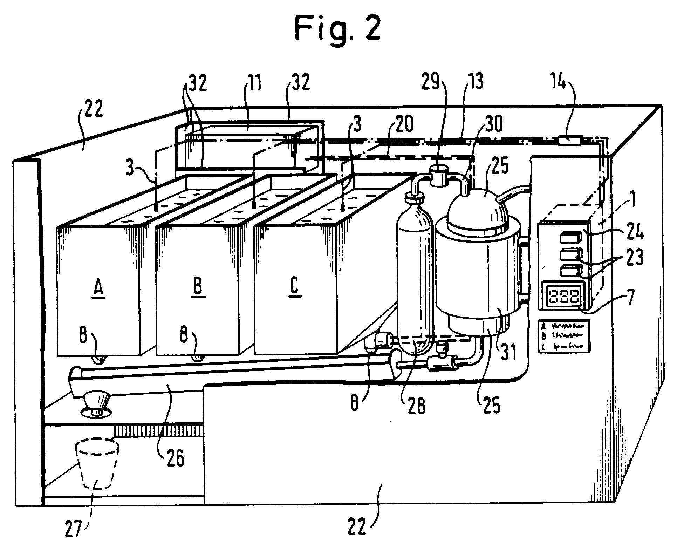

Das in Fig. 2 dargestellte Gerät zur Ausgabe und Aufbereitung von limonadenartigen Getränken besteht aus einem kastenartigen Gehäuse 22. Die Vorderwand dieses Gehäuses ist in der Zeichnung aufgeschnitten und der das Gehäuse nach oben abdekkende Gehäusedeckel abgenommen. Im Gerät befinden sich die Getränkebehälter A, B, und C für drei verschiedene Getränke. In ihnen befindet sich das Getränkekonzentrat. Alle Behälter A bis C besitzen Auslaufventile 8, welche elektromagnetisch über die Leitungen 20 ansteuerbar sind - gestrichelt dargestellt -. Sensoren 3, welche z.B. den Füllstand messen, ragen in die Behälter; weitere Sensoren können in ihnen enthalten sein. Die Sensoren liegen mit ihren Leitungen an der Eingabe-Steuerschaltung 1. Mit den Handhaben 23 auf der Armaturenleiste 24 sind die einzelnen Getränke für den Kunden vorwählbar. Die Handhaben arbeiten zusammen mit mehreren Kontakten Fig. 1a) des Tastenfeldes 6 (Fig. 1); an der Anzeige 7 ist ablesbar, was eingestellt wurde. Ferner befindet sich im Gerät ein Wasserspender 25, der bei Öffnung der Auslaufventile 8 eine vorgegebene Menge Wasser in eine Misch- und Auslaufrinne 26 einspeist. In dieser Rinne mischt sich das Konzentrat aus einem der Behälter A, B oder C mit dem Wasser, das Gemisch läuft durch eine Öffnugn in der Auslaufrinne, z.B. in einen Becher 27, ab. Auch im Wasserspender befinden sich Sensoren (nicht dargestellt), welche z.B. den Wasserstand im Wasserspender anzeigen; diese Sensoren stehen ebenfalls mit der Eingabe-Steuerschaltung 1 in Verbindung. Ein Druckgasbehälter 28, z.B. für CO₂-Gas ist mit dem Wasserspender 25 über eine mit einem Druckreduzierventil 29 versehenen Gasleitung 30 verbunden. Das in die Auslaufrinne einzuspeisende Wasser ist CO₂-haltig. Ferner befindet sich um den Wasserspender ein Kühlmantel 31 mit einer darin gelagerten Kühlschlange (nicht dargestellt); die Kühlschlange steht indirekt in Verbindung mit einem Kühlaggregat (nicht dargestellt). Im Wasserspender befinden sich daher auch Sensoren, welche die Temperatur des Mischwassers, welches in die Auslaufrinne eingespeist wird, messen. Sinkt die Temperatur des Wassers unter einen Grenzwert, so muß auch nachgekühlt werden Die Eingabe-Steuerschaltung steht über die Signalleitung 13 in Verbindung mit der Leistungs-Steuerschaltung 11. Letztere Schaltung ist durch Isolierplatten 32 vom Gehäuse 22 getrennt. Die Isolierplatte schützt das Gehäuse gegen Netzspannung, auch wird durch die Isolierplatten die Leistungs-Steuerschaltung gegen Wasser und Säuren geschützt. Von der Leistungs-Steuerschaltung werden z.B. über die Leitungen 20, die Ventile und die Aggregate des Kühlsystems geschaltet.

Es wurde dieses Beispiel eines Getränkeautomaten gewählt, um zu zeigen, daß es erforderlich ist, für eine gute Isolierung der berührbaren, meist metallischen Teile des Gerätes Sorge zu tragen, denn in derartigen Geräten, in welchen GAse, Säuren und Wasser für die Zubereitung von Getränken benötigt werden, besteht leichter die Gefahr, daß Netzspannung - wenn auch über Kriechstrecken - an metallische Teile des Gehäuses gelangt und daher die Bedienungsperson geschädigt werden kann, was unbedingt vermieden werden soll.

## Patentansprüche

1. Elektrisches Haushaltgerät oder Gerät für Gaststätten und Beherbergungsbetriebe mit einer Steuerschaltung zum Ansteuern von Leistungselementen (8, 9, 10), wobei dieses Gerät Stromkreise unterschiedlicher Spannung besitzt, jedoch eine gemeinsame Stromversorgung aufweist und die Arbeitsabläufe im Gerät durch den Zustand seiner Geräteteile oder Gruppen bzw. auch von dem in ihm enthaltenen Arbeitsgutes messenden Sensoren (3) beeinflußt werden und die Arbeitsabläufe über eine Tastatur (23) vorwählbar sind, **dadurch gekennzeichnet,** daß im Gerät die Steuerschaltung in mindestens eine Eingabe-Steuerschaltung (1) und eine Leistungs-Steuerschaltung (11) unterteilt ist, daß die Tastatur (23) am Eingang der Eingabe-Steuerschaltung (1) anliegt und die Leistungselemente (8, 9, 10) am Ausgang der Leistungssteuerschaltung (11) angeschlossen sind, daß in der Eingabe-Steuerschaltung (1) ein Parallel-Serienwandler (17) und in der Leistungs-Steuerschaltung (11) ein Serien-Parallelwandler (18) enthalten sind, daß diese über zumindest eine galvanisch trennende Signalverbindung (13, 14) gekoppelt sind, in der die Signale in Serie übertragen werden, und daß zumindest die Stromversorgung für die Eingabe-Steuerschaltung (1) über einen Trenntransformator von der Geräte-Stromversorgung (L1, L2) galvanisch getrennt ist.

2. Elektrisches Gerät nach Anspruch 1, dadurch gekennzeichnet, daß die Eingabe-Steuerschaltung (1) und die Leistungs-Steuerschaltung (11) jeweils mittels Niedere-Gleichspannung betrieben sind.

3. Elektrisches Gerät nach Ansprüchen 1 und 2, dadurch gekennzeichnet, daß die Stromversorgung der Eingabe-Steuerschaltung (1) und der Leistungs-Steuerschaltung (11) jeweils über einen Spannungswandler mit Wechselstrom-Gleichstrom-Wandlung (5 und 5') erfolgt.

4. Elektrisches Gerät nach Anspruch 1 und 2, dadurch gekennzeichnet, daß die Signalverbindung(en) (13) von der Eingabe-Steuerschaltung (1) zur Leistungs-Steuerschaltung (11) mittels fotooptischer und/oder fotoelektrischen Leitern (14, 15, 16) erfolgt.

5. Elektrisches Gerät nach Ansprüchen 1 und 4 dadurch gekennzeichnet, daß in den Signalverbindungen bzw. in der Signalverbindung (13) ein fotooptischer ein fotoelektrischer Wandler (14) enthalten ist.

6. Elektrisches Gerät nach Anspruch 1, dadurch gekennzeichnet, daß an der Leistungs-Steuerschaltung (11) die Betriebselemente (8, 9 und 10) angeschlossen sind.

7. Elektrisches Gerät nach Ansprüchen 1 und 6, dadurch gekennzeichnet, daß den Betriebselementen (8, 9 und 10) ein elektrischer Verstärker (12) vorgeschaltet ist.

8. Elektrisches Gerät nach Anspruch 1, dadurch gekennzeichnet, daß an die Eingabe-Steuerschaltung (1) an ihrem Eingang ein Analog-Digitalwandler (2) und Sensor-Signalleitungen (3) und an der Leistungs-Steuerschaltung (11) mehrere Signalleitungen zur Schaltung der Betriebselemente (8, 9 und 10) angeschlossen sind, wobei letztere Betriebselemente galvanisch von der Eingangs-Steuerschaltung getrennt sind.

9. Elektrisches Gerät nach Anspruch 1, dadurch gekennzeichnet, daß an der Eingabe-Steuerschaltung (1) eine Anzeige (7) sowie ein Tastenfeld (6) angeschlossen sind.

## Claims

1. Electrical household apparatus or apparatus for restaurants or accommodation facilities with a control circuit for the controlling of power elements (8, 9, 10), wherein this apparatus possesses circuits of different voltage, but has a common current supply, and the operating courses in the apparatus are influenced by the state of its apparatus components or groups or also by the sensors (3) measuring work stock contained therein and the operating courses are preselectable by a keyboard (23), characterised thereby that in the apparatus the control circuit is subdivided into at least one input control circuit (1) and a power control circuit (11), that the keyboard (23) lies at the input of the input control circuit (1) and the power elements (8, 9, 10) are connected to the output of the power control circuit (11), that a parallel-to-series converter is contained in the input control circuit (1) and a series-to-parallel converter (18) in the power control circuit (11), that these are coupled by way of at least one resistively isolating signal connection (13, 14) in which the signals are transmitted in series, and that at least the current supply for the input control circuit (1) is resistively isolated from the apparatus current supply (L1, L2) by way of an isolating transformer.

2. Electrical apparatus according to claim 1, characterised thereby that the input control circuit (1) and the power control circuit (11) are each operated by means of low direct voltage.

3. Electrical apparatus according to claims 1 and 2, characterised thereby that the current supply of each of the input control circuit (1) and the power control circuit (11) is effected by way of a respective voltage transformer with conversion (5 and 5') of alternating current to direct current.

4. Electrical apparatus according to claim 1 and 2, characterised thereby that the signal transmitter(s) (13) from the input control circuit (1) to the power control circuit (11) is(are) effected by means of photo-optical and/or photo-electric conductors (14, 15, 16).

5. Electrical apparatus according to claims 1 and 4, characterised thereby that a photo-optical [or] a photo-electric converter (14) is contained in the signal connections or in the signal connection (13).

6. Electrical apparatus according to claim 1, characterised thereby that the operating elements (8, 9 and 10) are connected to the power control circuit (11).

7. Electrical apparatus according to claims 1 and 6, characterised thereby that an electrical amplifier (12) is connected ahead of the operating elements (8, 9 and 10).

8. Electrical apparatus according to claim 1, characterised thereby that an analog-to-digital converter (2) and sensor signal lines (3) are connected to the input control circuit (1) at its input and several signal lines for connection of the operating elements (8, 9 and 10) are connected to the power control circuit (11), wherein the latter operating elements are resistively isolated from the input control circuit.

9. Electrical apparatus according to claim 1, characterised thereby that an indicator (7) as well as a pushbutton field (6) are connected to the input control circuit (1).

## Revendications

1. Appareil ménager électrique ou appareil électrique pour des restaurants et des centres d'accueil ou d'hébergement, comportant un circuit de commande pour la commande d'éléments de puissance (8, 9, 10), l'appareil étant pourvu de circuits électriques avec des tensions différentes mais comportant une alimentation électrique commune et les séquences de fonctionnement dans l'appareil étant influencées par l'état de ses éléments ou groupes d'éléments et de capteurs (3) qui mesurent le produit contenu dans ceux-ci et les séquences de fonctionnement pouvant être sélectionnées à l'aide d'un clavier (23), caractérisé en ce que, dans l'appareil, le circuit de commande est subdivisé en au moins un circuit de commande d'entrée de données (1) et un circuit de commande de puissance (11), en ce que le clavier (23) est connecté à l'entrée du circuit de commande d'entrée de données (1) et les éléments de puissance (8, 9, 10) sont connectés à la sortie du circuit de commande de puissance (11), en ce que le circuit de commande d'entrée de données (1) comprend un convertisseur parallèle-série (17) et le circuit de commande de puissance (11) un convertisseur série-parallèle (18), en ce que ces convertisseurs sont couplés par l'intermédiaire d'au moins une liaison de signal (13, 14) opérant une séparation galvanique, dans laquelle les signaux sont transmis en mode série, et en ce qu'au moins l'alimentation électrique du circuit de commande d'entrée de données (1) est isolée galvaniquement de l'alimentation électrique (L1, L2) de l'appareil par l'intermédiaire d'un transformateur d'isolement.

2. Appareil électrique selon la revendication 1, caractérisé en ce que le circuit de commande d'entrée de données (1) et le circuit de commande de puissance (11) sont alimentés chacun avec une tension continue faible.

3. Appareil électrique selon les revendications 1 et 2, caractérisé en ce que le circuit de commande d'entrée de données (1) et le circuit de commande de puissance (11) sont alimentés en courant chacun par l'intermédiaire d'un convertisseur de tension alternatif-continu (5 et 5').

4. Appareil électrique selon les revendications 1 et 2, caractérisé en ce que la (les) liaison(s) de signal (13) entre le circuit de commande d'entrée de données (1) et le circuit de commande de puissance (11) est (sont) réalisées par l'intermédiaire de conducteurs photo-optiques et/ou photo-électriques (14, 15, 16).

5. Appareil électrique selon les revendications 1 et 4, caractérisé en ce que la (les) liaison(s) de signal (13) entre le circuit de commande d'entrée de données (1) et le circuit de commande de puissance comprend (comprennent) un convertisseur photo-optique et/ou photo-électrique (14, 15, 16).

6. Appareil électrique selon la revendication 1, caractérisé en ce que les éléments de puissance (8, 9 et 10) sont connectés au circuit de commande de puissance (11).

7. Appareil électrique selon les revendications 1 et 6, caractérisé en ce qu'un amplificateur électrique (12) est connecté en amont des éléments de puissance (8, 9 et 10).

8. Appareil électrique selon la revendication 1, caractérisé en ce qu'un convertisseur analogique numérique (2) et des lignes de signal (3) de détecteur sont connectés à l'entrée du circuit de commande d'entrée de données (1) et plusieurs lignes de signal sont connectées au circuit de commande de puissance (11) aux fins de commuter les éléments de puissance (8, 9, 10), ces derniers éléments de puissance (8, 9 et 10) étant séparés galvaniquement du circuit de commande d'entrée de données.

9. Appareil électrique selon la revendication 1, caractérisé en ce qu'un moyen d'affichage (7) et un clavier (6) sont connectés au circuit de commande d'entrée de données (1).
